Europäisches Patentamt

European Patent Office

Office européen des brevets

(11) Publication number: **0 288 111 B1**

(12) **EUROPEAN PATENT SPECIFICATION**

(45) Date of publication of patent specification: **01.07.92** (51) Int. Cl.⁵: **H02M 7/515, H02M 7/5387**

(21) Application number: **88200696.8**

(22) Date of filing: **11.04.88**

(54) **Symmetrical electrical snubber circuit.**

(30) Priority: **16.04.87 NL 8700918**

(43) Date of publication of application:
**26.10.88 Bulletin 88/43**

(45) Publication of the grant of the patent:
**01.07.92 Bulletin 92/27**

(84) Designated Contracting States:
**AT BE CH DE ES FR GB GR IT LI LU NL SE**

(56) References cited:
**WO-A-84/00858
DE-A- 2 128 454
DE-A- 2 639 589
DE-A- 3 521 983**

(73) Proprietor: **HOLEC SYSTEMEN & COMPONEN-
TEN B.V.
Tuindorpstraat 61
NL-7555 CS Hengelo(NL)**

(72) Inventor: **Mezger, Hendrik Johan
Balistraat 12
NL-7556 AJ Hengelo(NL)**
Inventor: **Van Strien, Jacob Cornelis
Mechelsestraat 2
NL-3332 EL Zwijndrecht(NL)**

(74) Representative: **Baarslag, Aldert D. et al
Nederlandsch Octrooibureau Schevening-
seweg 82 P.O. Box 29720
NL-2502 LS 's-Gravenhage(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a symmetrical electrical snubber circuit for protecting at least two series-connected switch members of which the ends which are not connected to each other form a positive and a negative terminal, respectively, for connecting, via at least one coil, a direct voltage, at least one first element having diode action connected in the reverse direction and a series circuit of at least one capacitor and at least one second element having diode action connected in the forward direction relative to the terminals for direct voltage being connected in parallel to each of the switch members respectively, said at least one capacitor of each series circuit being connected to the mutual connection point of the switch members, and means for discharging the energy stored in the capacitors being provided.

A symmetrical electrical snubber circuit of this type is known from German Patent Application DE-A1-3,521,983.

In this known snubber circuit, which is of the so-called direct or switch snubber type, the respective capacitors limit the voltage increase (dv/dt) across the switch members during switching-off, i.e. the transition to which they become non-conductive, and the coil results in a limitation of the current increase (di/dt) through the switch members during switching-on, i.e. the transition to which they become conductive. The first element, connected anti-parallel to each switch member and having diode action fulfils the "free-wheeling diode" function during inductive loading and in switch members such as gate turn off (GTO) thyristors at the same time prevents passage of current in the nonpermissible direction.

Besides this direct or switch snubbering, German Patent Application DE-A1-2,639,589 furthermore discloses the principle of indirect or load snubbering. In this, the series circuit of the at least one capacitor and the at least one second element having diode action is connected in parallel to the load, in contrast to the switch snubbering.

The at least one coil for limiting the current increase is located in this arrangement in the supply line between the series circuit and the load.

Depending on the stray inductance unavoidably present in the supply and in the connections of the circuit, the stray self-inductance of the electronic components of the circuit and the rate of the current change during switching-off of a switch member, a voltage overshoot occurs in the direct voltage of the supply and a voltage peak across the switch member itself.

The stray inductance of the supply and of the connecting lines thereof to the switch members can be imagined as being replaced by an equivalent stray inductance in the supply circuit. In switch snubbering, this equivalent stray inductance influences the voltage overshoot, whereas in the case of load snubbering it mainly determines the voltage peak across the switch members themselves. The stray self-inductance of the series circuit of the one capacitor and the one second element having diode action as well as the stray inductance of their connecting lines by contrast determines, in the case of switch snubbering, the voltage peak across the associated switch member and in load snubbering, it determines the voltage overshoot of the supply voltage. The energy stored in the at least one coil for limiting the current increase results in an increase in the voltage overshoot in the direct voltage of the supply.

In the case of switch snubbering, the series circuit of the at least one capacitor and second element having diode action may be arranged as closely as possible to the switch member in order to minimize the voltage peak across it. The equivalent stray inductance in the supply circuit is more difficult to control in practice so that the voltage peak across the switch member is larger in the case of load snubbering than in the case of switch snubbering. The converse applies for voltage overshoot.

In particular when using semi-conductor switches such as GTO thyristors, field-effect transistors (FET's) and bipolar transistors, such a voltage peak or voltage overshoot across a non-conductive switch member may lead to breakdown thereof as a result of which it may become defective. Particularly in the case of load snubbering, above certain switch-off currents it becomes impossible, as a consequence of the high switch-off losses in the switch members, to use, for example, GTO thyristors. Switch snubbering is therefore to be preferred.

German Patent Application DE-2,128,454 discloses in fig. 7 a symmetrical switch snubber circuit, wherein the means for discharging the energy stored in the associated capacitor on switching a switch member from the switched-on to the switched-off state consist of a resistor connected in parallel to said capacitor. During repeated switching-on of the associated switch member, this energy is converted to heat in this resistor. During switching-off of the switch members, the energy stored in the at least one coil will also be converted to heat in these parallel resistors.

The discharge time of the capacitors is essentially determined by the associated resistor in which they discharge. This resistor cannot be chosen to be too small because this reduces the voltage increase limiting operation of the associated capacitor. On the other hand, the resistor cannot be chosen to be too large because discharge then takes too long as a result of which the frequency with which the switch member can be switched is reduced. Since the switch members are only optimally protected by the capacitors against too high a voltage increase when they are discharged.

In the circuit known from DE-A1-3,521,983 already mentioned in the preamble, instead of a resistor, a series circuit of a diode element and a voltage source allowing back transfer of electric energy is disclosed, for discharging the energy stored in the associated capacitor and the current increase limiting coil essentially without loss of energy. However, it is mentioned that said voltage source may be replaced by a resistor or other electric energy consumable element.

Although DE-A1-3,521,983 discloses a snubber circuit for a symmetrically arranged pair of switches, the circuit itself is composed of identical protective circuits, operating individually for an associated switch.

The invention now has the object of providing an essentially loss-free symmetrical snubber circuit low in stray inductance with which the voltage overshoot in the supply voltage and the voltage peaks across the switch members are at the same time effectively reduced.

This is achieved according to the present invention by providing a further series circuit of at least one further capacitor and at least one third element having diode action connected in the forward direction relative to the terminals for direct voltage, and being connected, respectively, between the connecting point of said at least one capacitor and said at least one second element having diode action of the series circuit associated with the one switch member and the terminal for direct voltage associated with the other switch member, all this in a manner such that a snubber circuit which is as low in stray inductance as possible is obtained, and wherein the means for discharging the stored energy being connected to the respective further capacitors.

The means for discharging the stored energy can be implemented in a known manner using at least one switch member, one element having diode action and one coil, with which the energy stored in the further capacitors can be put to useful application or can be returned to the supply source.

Detailed consideration of the operation of the circuit according to the invention in comparison with the circuit known from DE-A1-3,521,983 shows that in the circuit according to the invention the capacitors of a series circuit connected in parallel to the switch members are simultaneously active during transfer of the current through the load during switching-off of a switch member. These capacitors may therefore each have smaller dimensions than in a comparable application with the known circuit and therefore have a smaller stray self-inductance.

The invention consequently provides a symmetrical snubber circuit low in stray inductance which on the one hand provides protection, via the capacitors connected in parallel to the switch members, against an excessive voltage increase over the switch members themselves and on the other hand effectively limits, via the further capacitors, the magnitude of the direct voltage of the supply across the switch members. By incorporating the at least one coil in the connection to the switch members between the supply source and the associated terminal for direct voltage of a switch member an effective protection against an excessive current increase during switching-on is obtained, the energy stored in this at least one coil as well as the energy stored in the capacitors connected in parallel to the switch members being transferred to the further capacitors during switching due to resonant action, so that it is not necessary to incorpate any resistors in the circuit in which the energy is converted to heat. The energy stored in these further capacitors can then be returned, with the aid of the energy transport means, in a useful manner to the direct voltage supply source. The snubber circuit according to the invention is thus in essence loss-free.

In order to be able to store both the energy of the capacitors connected in parallel to the switch members as well as the energy of the at least one current increase-limiting coil present in the circuit, the further capacitors have a larger value than the capacitors connected in parallel to the switch members. For considerations of symmetry, a current increase-limiting coil is preferably incorporated in the two connections of the direct voltage to the terminals associated with the switch members.

It is mentioned that the said patent specification WO-A-8,400,858 discloses a non-symmetrical loss-free snubber circuit for a series connection of two switch members, but in which a capacitor is connected in parallel expressly only to just one switch member and only one further capacitor is applied for receiving the energy stored in the current increase-limiting coil and the first-mentioned capacitor. It is attempted to protect both switch members with this non-symmetrical snubber circuit which in principle is a combination of switch snubbering and load snubbering. A larger voltage peak will therefore occur over one of the switch members than is the case with the symmetrical circuit according to the invention.

The energy build-up during switching over of the switch members is distributed over two capacitors in the symmetrical snubber circuit according to the invention while all the energy has to be stored in one larger capacitor in the non-symmetrical snubber circuit.

The snubber circuit according to the invention furthermore has the advantage that as a result of the one switch member becoming non-conductive the capacitor connected in parallel to the other switch member is discharged via the load connected to the connecting point of the two switch members, so that the discharging current will not flow through the associated switch member when the latter again becomes conductive and the frequency at which the switch members can be switched may be larger because the associated capacitors are discharged earlier.

Due to its symmetry, the subber circuit according to the invention is particularly suitable for application in combination with very high-speed switching semi-conductor elements such as GTO power thyristors or power transistors.

Further advantages and uses of the symmetrical snubber circuit according to the invention in, inter alia, an inverter having three output voltage levels and a three-phase circuit as well as the operation thereof will be explained in detail in the text which follows with reference to exemplary embodiments shown in the drawings, in which:

Figure 1 shows an example of a simple switch snubber circuit for protecting one switch member.

Figure 2 shows an example of a simple load snubber circuit for protecting one switch member.

Figure 3 shows, with solid and broken lines, the course of the voltage variation across the switch member of Figure 1 and Figure 2, respectively during switching-off thereof.

Figure 4 shows the known symmetrical switch snubber circuit, built up of two circuits according to Figure 1.

Figure 5 shows a simple circuit for limiting the voltage overshoot caused by the stray inductance in the circuit and in the one or the two current increase-limiting coils.

Figure 6 shows a preferred embodiment of the symmetrical snubber circuit according to the invention.

Figure 7 shows a possible embodiment of a circuit for discharging the energy stored in the further capacitors.

Figures 8-10 show the current flow through the circuit according to Figure 6 in various states of the switch members.

Figure 11 shows a preferred embodiment of a symmetrical three-phase snubber circuit according to the invention.

Figure 12 shows a preferred embodiment of a snubber circuit according to the invention in a circuit for obtaining an output voltage of three levels.

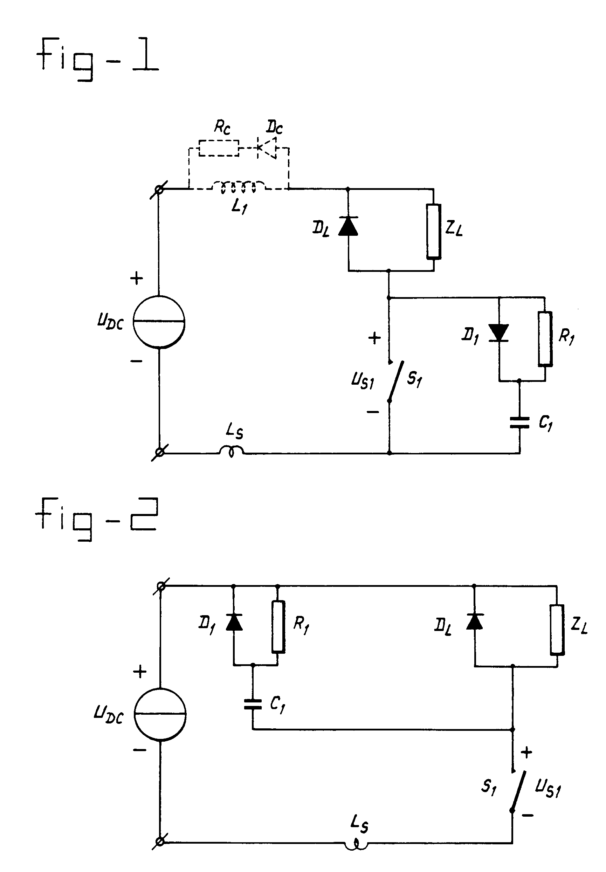

Figure 1 gives an example of a so-called non-loss-free switch snubber. The voltage source $U_{DC}$ forms the supply of the circuit and is often also represented as a capacitor (not shown). The load $Z_L$ is connected in series with the switch member $S_1$ to the voltage source. The equivalent stray inductance $L_s$ of the supply lines to the circuit and the stray in the supply $U_{DC}$ is also incorporated in this series circuit. A freewheeling diode $D_L$ is connected in the reverse direction relative to the supply voltage parallel to the load $Z_L$ which is assumed to be inductive. The snubber circuit consists of a parallel circuit of a diode $D_1$ and a resistor $R_1$ in series with a capacitor $C_1$. The snubber circuit is connected in parallel to the switch member $S_1$. For the sake of clarity, the switch member is drawn as a mechanical switch but, as already mentioned in the introduction, this may of course also be a semiconductor switch such as a GTO thyristor, FET or bipolar transistor. The circuit operates as follows.

When the switch member $S_1$ is switched on, i.e. is in its conductive state, the capacitor $C_1$ will be totally discharged via the resistor $R_1$. The energy stored in the capacitor $C_1$ is then dissipated as heat in the resistor $R_1$. When the switch member $S_1$ switches off, i.e. transites into the non-conducting state, the voltage across the capacitor $C_1$ will thus be equal to zero.

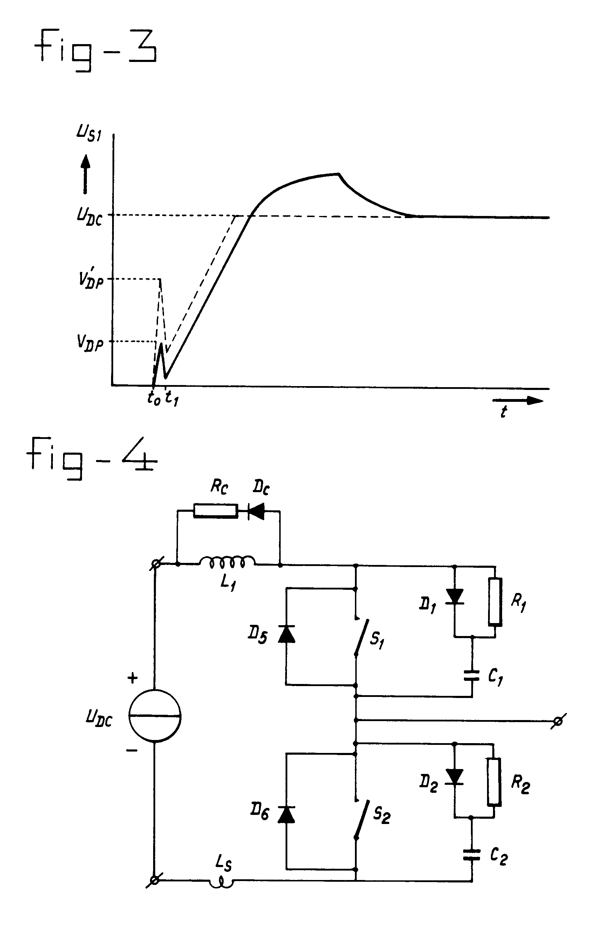

As a result of the inductive character of the load $Z_L$, the behaviour of which at the moment of switching off can be approximated by a current source, current will remain flowing in the circuit when the switch member $S_1$ is switched off. This means that the current i which flowed first through the switch member $S_1$ then has to be taken over by the diode $D_1$ in series with the capacitor $C_1$. The voltage waveform which is produced across the switch member $S_1$ during switching-off thereof is represented with a solid line in Figure 3. At time $t_0$, the switch member begins to switch off and at time $t_1$ it is completely switched off. Directly after switching-off, there is a voltage peak with a maximum value VDP over the switch member. Because the voltage across the capacitor $C_1$ cannot abruptly change, it is necessary to look for the cause of this voltage peak in the stray inductance in the circuit formed by $S_1$-$D_1$-$C_1$. The magnitude of the maximum value $V_{DP}$ of the voltage peak is, besides the magnitude of this stray inductance, also dependent on the rate at which the switch member $S_1$ switches, i.e. the current change per unit time di/dt. When the current is taken over by the capacitor $C_1$ and the diode $D_1$ the voltage $U_{S1}$ over the switch member $S_1$ will increase linearly up to the supply voltage $U_{DC}$. At that instant, the current through the load $Z_L$ is taken over by its freewheeling diode $D_L$ and an overshoot occurs in the voltage $U_{S1}$ because the energy stored in the stray inductance $L_s$, having a magnitude of $1/2\, L_s i^2$, is transported to the capacitor $C_1$. The current through the inductive load $Z_L$ can continue to flow via its freewheeling diode $D_L$. The capacitor $C_1$ is discharged again via the resistor $R_1$ down to the supply voltage $U_{DC}$, as can be seen by the solid line in Figure 3, and thereafter remains charged up at this value.

Because there is always stray self-inductance present in the circuit $S_1$-$D_1$-$C_1$, a voltage peak resulting in switching-off losses will always occur for a high $di/dt$ during switching-off of the switch member $S_1$. In order to keep these switching-off losses low it is therefore important to keep the stray inductance in these circuits as small as possible. In order, furthermore, to limit the voltage overshoot over the switch member $S_1$ as much as possible it is necessary to keep the equivalent stray inductance $L_s$ as small as possible.

In order to limit the current increase during switching-on of the switch member $S_1$ a coil in series with the supply of the circuit is frequently incorporated in practice, for example the coil $L_1$ shown by dotted lines in Figure 1. This coil has a freewheeling path via a series circuit, connected in parallel thereto, consisting of a diode $D_C$, in rest direction relative to the supply voltage, and a resistor $R_C$. Due to the resistor $R_C$ the current through the coil $L_1$ will decrease during recovery. The voltage over the coil then increases the voltage overshoot in the direct voltage of the supply. The coil $L_1$ is not necessary for every application. This depends, inter alia, on the speed with which switch member $S_1$ switches.

Figure 2 gives an example of a so-called non-loss-free load snubbering. The components given with the same indices correspond to those shown in Figure 1. The snubber circuit $D_1$, $C_1$, $R_1$ is connected in parallel to the inductive load $Z_L$ with freewheeling diode $D_L$. The circuit operates as follows.

When the switch member $S_1$ is switched on, the capacitor $C_1$ is charged up via the resistor $R_1$. At the same time, energy is dissipated in $R_1$. The voltage waveform $U_{S1}$ which is produced across the switch member $S_1$ during switching-off thereof is shown with a broken line in Figure 3. At the time $t_0$, $S_1$ begins to switch off and at $t_1$ it is completely switched off. Directly after switching-off, a voltage peak occurs again over the switch member but now with a maximum value $V'_{DP}$. The magnitude thereof is determined by the stray self-inductance in the circuit formed by $S_1$-$C_1$-$D_1$-$L_s$, Ls again representing the equivalent stray inductance of the supply and the connecting lines to the load and the switch member, and by the $di/dt$ during switching-

off of $S_1$. In contrast to the circuit of Figure 1, $L_s$ is now located in the circuit which determines the voltage peak as a result of which $V'_{DP}$ is larger than $V_{DP}$, with the switching-off conditions being the same as in the circuit of Figure 1, as shown in Figure 3. When the switch member is switched off and the current i through the load is taken over by $C_1$-$D_1$ thevoltage $US_1$ increases linearly to the supply voltage $U_{DC}$ after the voltage peak. At that instant, the current through load $Z_L$ is taken by its own freewheeling diode $D_L$. This circuit shows very little voltage overshoot because the stray self-inductance in $C_1$-$D_1$-$D_2$ is low. Although not shown in the drawing, a current increase-limiting coil $L_1$ with a series circuit, connected in parallel thereto, of a resistor $R_C$ and diode $D_C$ connected in the reverse direction relative to the supply voltage can also be incorporated in this circuit. This current increase-limiting coil $L_1$ should be incorporated in this case in the connecting line between $R_1$-$D_1$ and the load $Z_L$.

On comparison of the load snubber with the switch snubber it is noteworthy that the former generally has a larger voltage peak which determines the eneoff thereof. This larger voltage peak is caused not only by the energy stored in the equivalent stray inductance $L_s$ being dissipated in the switch member but also by the physical dimensions of, in particular, the connecting lines between the snubber circuit and the load being larger than in the switch snubber, which results in a larger stray inductance in the circuit. Especially in the case of high-speed switch members such as GTO-thyristors, in which a high $di/dt$ occurs, as already mentioned in the introduction, it becomes impossible to use load snubbering above certain switch-off currents as a result of the high switch-off losses in the switch members.

In view of the limitations imposed by load snubbering on the magnitude of the current to be switched off, particularly with high-speed switching switch members, attention in the text which follows will be focused also on improving the switch snubber.

The above-described snubber circuit may also be doubly designed, as a bridge circuit, so that the load can be applied alternately to the positive and to the negative terminals of the supply source $U_{DC}$ for, for example, inverter operation. The circuit is then as shown in Figure 4 and corresponds to the symmetrical switch snubber of the state of the art. In this circuit, two switch members $S_1$ and $S_2$ have been incorporated in a series circuit, each with its own snubber circuit. The coil $L_1$ again serves for limiting the current increase during switching-on of a switch member. The operation of the circuit is in principle the same as with a single switch member, with the proviso that the switch members are switched alternately. The connecting point of the two switch members forms the output of the circuit to which a load can be connected. The freewheeling diode $D_L$ shown in Figure 1 is replaced, in the circuit of Figure 4 as shown, by a diode, $D_5$ and $D_6$ respectively, connected in parallel to each switch member.

The biggest disadvantage of the above-described single and double snubber circuits is the fact that the energy stored in the capacitors $C_1$ or $C_2$ is dissipated in a resistor during switching-on of the associated switch member. The energy stored in the coil $L_1$ is dissipated in the resistor $R_C$ during switching-off of $S_1$ or $S_2$. As already indicated in the introduction, the value of the resistors $R_1$, $R_2$ cannot be chosen to be too small in view of an excessive load on the associated switch member during switching-on thereof. An excessively high value of the said resistors means that the capacitors are discharged too slowly, which reduces, as mentioned, the frequency at which the switch members can be switched. This circuit furthermore possesses no protection against the voltage overshoot caused by stray inductance $L_s$ and the resistor $R_C$. All the energy stored in the stray inductance $L_s$ and the voltage drop across the resistor $R_C$ together form the voltage overshoot which may result in breakdown across a switched-off switch member, in particular in, for example, semiconductor switches, with all the disadvantageous consequences thereof.

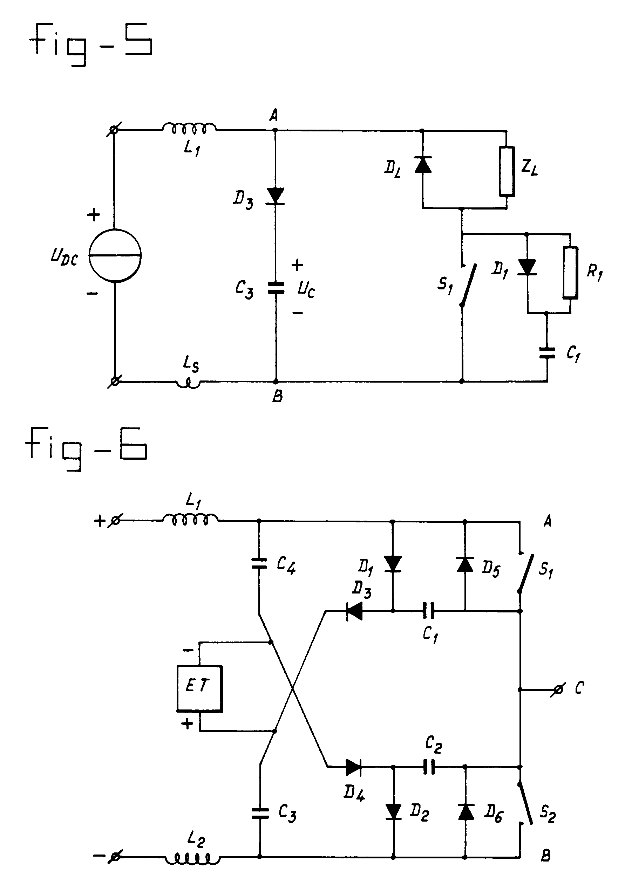

A simple and expedient manner of limiting voltage overshoot is the use of an overvoltage protection or so-called clipping circuit. An example of a very simple clipping circuit is shown in Figure 5. In parallel to the series circuit of the load $Z_L$ and the switch member $S_1$, there is connected a further series circuit comprising a capacitor $C_3$ and a diode $D_3$ connected in the forward direction relative to the supplying direct voltage $U_{DC}$. This series circuit forms the clipping circuit.

The capacitor $C_3$ of the clipping circuit, is relatively large relative to the capacitor $C_1$. As a result of the diode $D_3$, the capacitor $C_3$ remains at a constant voltage $U_c$ which is larger than $U_{DC}$. When the voltage over the clipping circuit becomes larger than the voltage over the capacitor $C_3$ the diode $D_3$ will start to conduct so that the voltage across the load and the switch member is kept at the value $U_c$. This means that the magnitude of the voltage $U_{AB}$ across the switch member is limited by means of the clipping circuit. The energy stored in the stray inductance $L_s$ and the coil $L_1$ is then supplied to the capacitor $C_3$, as a result of which $L_1$ does not have to be provided with a freewheeling circuit. The energy stored in the capacitor $C_3$ must be discharged in one manner or another, for example by being returned to the direct voltage source. The means for discharging this energy are not shown in Figure 5.

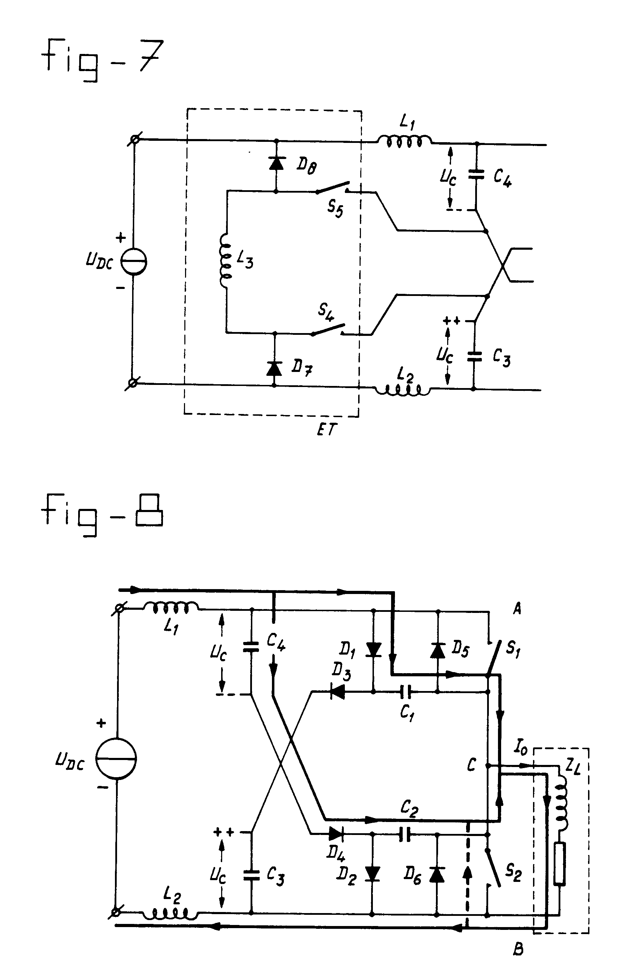

In the circuit according to the invention, at least two of these clipping circuits and a symmetrical snubber circuit according to the state of the art are then integrated in a manner such that the energy stored in the capacitors associated with the switch members and the energy of the used current increase-limiting coil(s) are supplied, during switching, to the capacitors of the respective clipping circuits, as a result of which there is no need to use a resistor in which this energy is dissipated. This results in an in essence loss-free snubber circuit. Because there are always two circuits active in the circuit according to the invention during switching over of a switch member an effective reduction of the influence of the unavoidable stray self-inductance is obtained. A preferred embodiment of the circuit according to the invention is shown in Figure 6

In a manner which is as low in inductance as possible, a freewheeling diode $D_5$, $D_6$ and a series circuit consisting of a diode and a capacitor, $D_1$, $C_1$ and $D_2$, $C_2$, respectively, are connected in parallel to each switch member $S_1$, $S_2$. The capacitors $C_1$ and $C_2$ are therefore each connected by one end to the connecting point C of the two switch members $S_1$, $S_2$. A clipping circuit consisting of a diode $D_3$ and a capacitor $C_3$ is connected between the connecting point of the diode $D_1$ and the capacitor $C_1$ and the negative terminal B. Likewise, a clipping circuit consisting of a capacitor $C_4$ and a diode $D_4$ is connected between the terminal A and the connecting point of the series circuit consisting of the capacitor $C_2$ and the diode $D_2$. In order to keep the stray inductance in the circuit as low as possible, the diverse diodes and capacitors should be connected physically as close as possible to the respective switch members. A small stray inductance is absolutely necessary when high currents need to be switched off at high speed.

Means ET (energy transport) are connected to the capacitors $C_3$ and $C_4$ for discharging in a useful manner the energy stored in these capacitors. The means ET can be implemented in various ways, for example as shown in Figure 7. The supply circuits furthermore include two current increase-limiting coils $L_1$ and $L_2$. Use of more than one current increase-limiting coil depends on the use to which the circuit is to be put, the rate at which the switch members switch on and the type of the load which is connected to the connecting point C of the two switch members $S_1$ and $S_2$. For a satisfactory operation of the circuit it is essentially important that the current increase-limiting coil(s) $L_1$, $L_2$ is (are) connected at one end to the direct voltage of the supply and at the other end to the further capacitors $C_4$, $C_3$ respectively.

The diodes and capacitors $C_3$, $D_3$ and $C_4$, $D_4$ do not necessarily have to be connected in the sequence shown in Figure 6 to the terminals B, A respectively for direct voltage. The diode $D_3$ and the capacitor $C_3$ may for example be exchanged in position, as can the diode $D_4$ and the capacitor $C_4$. The capacitors $C_3$ and $C_4$ must of course have a capacitance such that they are capable of storing the energy stored in the capacitors $C_1$ and $C_2$ as well as in the current increase-limiting coil(s) $L_1$, $L_2$.

The elements shown in Figure 6 with a diode symbol do not necessarily have to be diodes but may be substituted by any other element having diode action, such as, for example, a thyristor acting as a diode. If desired, it is also possible to connect a plurality of elements in parallel or in series, which also applies to the capacitors shown. The switch members $S_1$ and $S_2$ may furthermore consist of groups of several parallel-connected switch members or may be designed as a so-called two-way switch. The switch members may furthermore form part of a so-called inverter circuit, chopper circuit, DC/DC converters and the like

Figure 7 shows a possible embodiment of the energy-discharge means ET, the energy stored in the capacitors $C_3$, $C_4$ being returned periodically to the direct voltage. A resonant circuit is formed by means of the switch members $S_4$, $S_5$ which of course are preferably also controlled semiconductor switches, as a result of switching-on thereof with $C_3$, $C_4$ respectively and the coil $L_3$, the energy from the capacitors being transferred to the coil. By switching the relevant switch member off again at the instant at which the energy is deposited in $L_3$, the resonant circuit is interrupted and $L_3$ supplies its energy via the diodes $D_7$, $D_8$ back to the supply source $U_{DC}$, whereafter the cycle may be repeated. Instead of supplying back to $U_{DC}$, it is also possible to supply an arbitrary direct current load in this manner, for example a fan for forced cooling of the circuit.

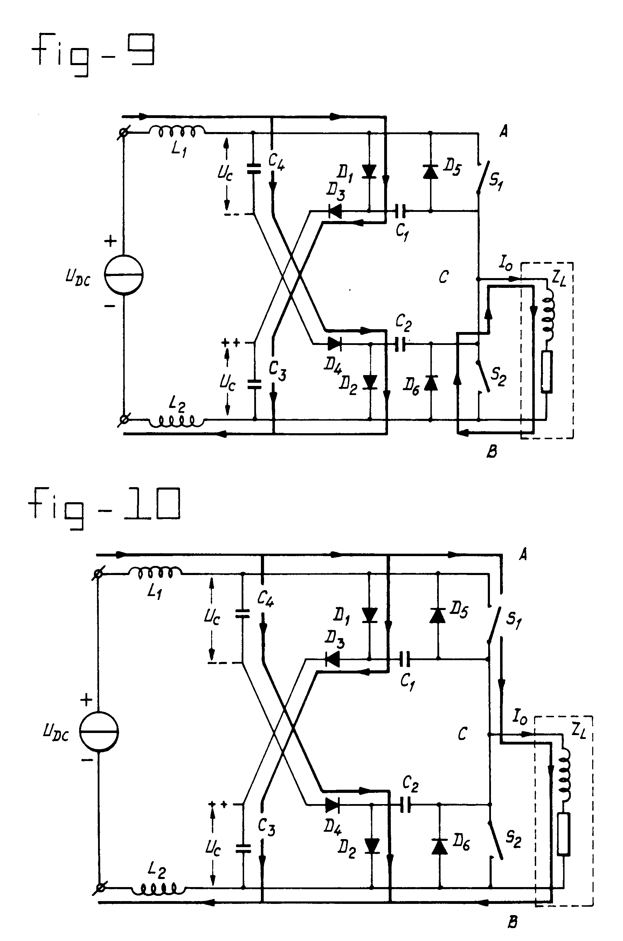

The operation of the circuit according to the invention is now illustrated with reference to Figures 8-10. In these, the output current $I_o$ through the load $Z_L$ is shown in only one direction. The operation in the other direction is conformable because of the symmetry of the snubber circuit. As already indicated, the load $Z_L$ is assumed to be highly inductive in nature. The time constant of the load $Z_L$ is assumed to be so large that the load during the switching can be regarded as being virtually a current source. For the sake of simplicity, the energy-discharge means ET have been omitted.

Imagine a situation in which the switch member $S_1$ is switched on and the switch member $S_2$ is switched off. The capacitors $C_3$ and $C_4$ are charged up to a voltage $U_c$ just like the capacitor $C_2$ which is charged up via $S_1$ and $D_2$ to the voltage $U_c$, $U_c$ being larger than $U_{DC}$. Capacitor $C_1$ is discharged.

The switch member $S_1$ will subsequently be switched off and the switch member $S_2$ switched on, it being assumed that $S_2$ does not switch on before $S_1$ changes to the non-conducting state. In order to achieve this, there will be a short delay time between switching-off of $S_1$ and switching-on of $S_2$. Due to this delay time there may be two different possibilities for the output voltage to change sign, namely

    a. The inductive current through the load $Z_L$ is so large that the output voltage changes sign during the delay time, or

    b. $S_2$ switches on before the output voltage has become low.

It is assumed that the switch member $S_1$ switches very quickly (ideal).

Let us now look at the situation as indicated under a. After the switching-off of $S_1$, a current flow as represented by the thick solid lines in Figure 8 will be obtained after a short time in the snubber circuit. Two current paths, namely a first current path, very low in stray self-inductance, via $D_1$-$C_1$ and a second current path via $C_4$-$D_4$-$C_2$ form in the snubber circuit, the currents through the load $Z_L$ flowing back to the voltage supply. In this phase the capacitor $C_1$ is charged up and thus $S_1$ is protected against an excessive voltage increase, and capacitor $C_2$ is discharged via load $Z_L$. The voltage across the load $Z_L$ decreases.

As soon as the voltage across the load $Z_L$ becomes zero, freewheeling diode $D_6$ becomes conductive. This results in the current due to the energy stored in the load $Z_L$ continuing to flow via this diode $D_6$, as indicated by the thick broken line in Figure 8. The energy stored in coils $L_1$ and $L_2$ will then be stored resonantly in the capacitor $C_1$ and the capacitor $C_4$. The resonant circuits therefore are formed by

$$L_1\text{-}[(D_1\text{-}C_1)//(C_4\text{-}D_4 C_2)]\text{-}(D_6//Z_L)\text{-}L_2$$

"//" indicating a parallel connection. In order to obtain these resonant circuits it is essential that the current increase-limiting coils $L_1$ and/or $L_2$ are incorporated in the circuit in the position shown in the figures.

As soon as the voltage over the capacitor $C_1$ becomes larger than the voltage over the capacitor $C_3$, and respectively the voltage over the capacitor $C_2$ becomes equal to zero, the diodes $D_3$ and $D_2$, respectively, become conductive the voltage $U_{AB}$ over the series circuit of the switch members $S_1$, $S_2$ is limited to the value Uc because the capacitors $C_3$ and $C_4$ are chosen so large that during this phase the voltage over these capacitors may be assumed to be constant and thus the voltage over the series circuit of the switch members is constant. The current flow in this situation is shown in Figure 9. During this phase, the energy from the coils $L_1$ and $L_2$ is stored further in the capacitors $C_3$ and $C_4$.

As soon as the current through the coils $L_1$ and $L_2$ is zero the voltage $U_{AB}$ will return to the value $U_{DC}$ and the circuit comes to rest. In this situation the capacitor $C_1$ is charged to $U_c$ and the capacitor $C_2$ discharged. After the said delay time has elapsed the switch member $S_2$ will switch on, as a result of which the current which may still flow through the freewheeling diode $D_6$ of the load $Z_L$, depending on the type of switch member, will then start to flow through $S_2$ or remain flowing through $D_6$.

Let us now look at the situation described under b. The voltages across the capacitors before the switch member $S_1$ switches off are the same as in the above-described situation. A current flow as shown by the thick solid lines in Figure 8 will also be obtained in this case when $S_1$ is switched off. When the switch member $S_2$ switches on a current as indicated by the thick broken line in Figure 8 will start to flow through it. A resonant phenomenon now occurs by which the capacitor $C_1$ is further charged up, and the capacitor $C_2$ further discharged. As soon as the voltage over $C_1$ becomes larger than the voltage across the capacitor $C_3$, respectively the voltage across $C_2$ becomes equal to zero, the diodes $D_3$ and $D_2$ become conductive and a current flow is produced as shown in Figure 9. The circuit will come to rest in the same manner as described for the situation a.

When the circuit has come to rest in the above-mentioned situations a and b as described, switching off of the switch member $S_2$ will cause no change because the current flowing through the load $Z_L$ will then be taken over by the freewheeling diode $D_6$.

When switch member $S_1$ is thereafter switched on again the voltage $U_{AB}$ becomes 0 volt. The current through $S_1$ will increase. The gradient of the current increase is limited by $L_1$, $L_2$ to $(di/dt)S_1 = U_{DC}/L_1,L_2$. When the current through $S_1$ is equal to $I_o$ the diode $D_6$ will start to block. A resonant circuit has then been formed by $L_1$-$S_1$-$[(C_1$-$D_3$-$C_3)//(C_2$-$D_2)]$-$L_2$. As a result $C_1$ is discharged to 0 volt and $C_2$ charged up to $U_c$. At the instant at which this situation is achieved the voltage $U_{AB}$ is limited by $(D_1$-$D_3$-$D_3)//$ $(C_4$-$D_4$-$D_2)$ to $U_c$ (Figure 10). The surplus energy from $L_1$, $L_2$ is stored in $C_3$, $C_4$. The current through $L_1$, $L_2$ is equal to $I_o$.

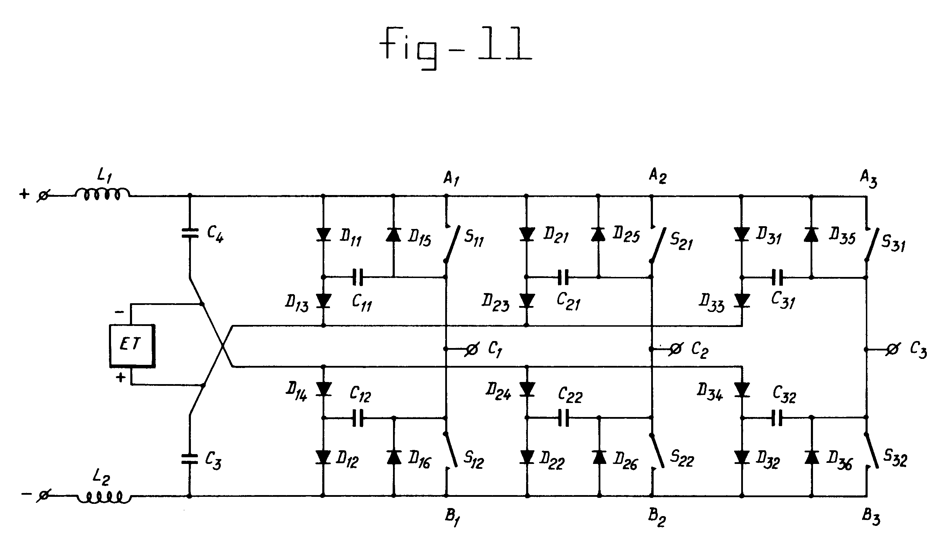

When, as in practice, the switch members form part of, for example, a three-phase inverter circuit as shown in Figure 11 in which the right-hand index of the numerals of the elements corresponds to the index of the circuit according to Figure 6, a load will be connected alternately between points $(AC)_i$ and $(BC)_i$ $i = 1, 2, 3 ...$ depending on the state of the other switch members. This means that a current can then flow through the load connected, for example, between the points $A_1$ and $C_1$ when the switch member $S_{12}$ is switched on. Switching off of $S_{12}$ then results in the capacitor $C_{11}$ being discharged in the same manner as described above for the capacitor $C_2$. The energy stored in the capacitor $C_{11}$ arrives in the capacitor $C_3$, as a result of which the switch member $S_{11}$ will not be loaded by this discharging current during switching on thereof. The switch member $S_{12}$ is protected by its discharge capacitor $C_{12}$ from excessive voltage increase.

As evident from the above, two separate circuits are simultaneously active during switching off of a switch member. For the case described in Figures 8-10 the situation is that, when the switch member $S_1$ is switched off, the snubber circuit of $S_1$ is active, i.e. the diode $D_1$ and capacitor $C_1$, and that the capacitor $C_2$ of the snubber circuit of $S_2$ is active at the same time via the clipping circuit formed by the capacitor $C_4$ and the diode $D_4$. The capacitors $C_1$ and $C_2$ are because of this in parallel. The value of the separate capacitors can therefore in principle be chosen to be smaller, with the resultant smaller stray self-inductance (smaller dimensions). This may be referred to, as it were, as a primary and secondary switch snubbering. The primary switch snubber $D_1$, $C_1$ is very low in stray inductance and therefore limits $V_{DP}$ (Figure 3) and thus the switch losses in the switch member. The secondary switch snubber $C_4$, $D_4$, $C_2$ assists in limiting the voltage increase after the voltage peak $V_{DP}$ and vice versa.

In relation to the simple clipping circuit shown in Figure 5, the circuit according to the invention has the advantage that already the current flows through one branch of the whole clipping circuit, namely $C_4$ and $D_4$, before clipping off the voltage, as a result of which this clipping circuit will show less voltage overshoot than the clipping circuit according to Figure 5 because no instantaneous current can flow through this clipping circuit due to the stray self-inductance.

In the three-phase embodiment of the snubber circuit according to the invention, shown in Figure 11, the capacitors $C_3$ and $C_4$ are used jointly for the whole circuit. The energy discharge means are also only single-fold in embodiment, just like the current increase-limiting coil(s) $L_1$, $L_2$. It is of course possible to design the capacitors $C_3$ and $C_4$ separately for each circuit, while the advantage still remains that the energy discharge means can be used jointly for all said capacitors.

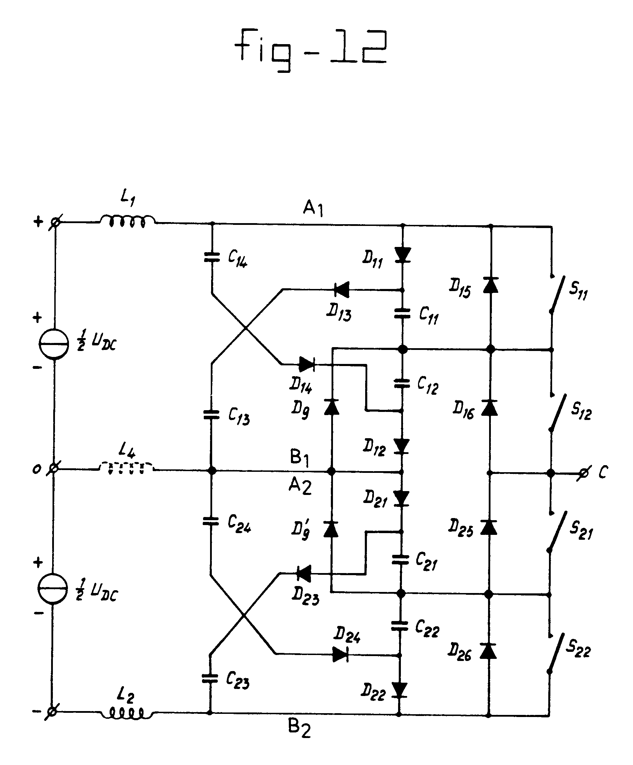

Figure 12 shows the snubber circuit according to the invention as applied in a so-called inverter, which can accept three potentials at its output C, namely positive, zero and negative. The connection shown in fact consists of two series-connected symmetrical snubber circuits according to Figure 6, the direct connection between the diodes $D_{12}$, $D_{21}$ and the switch members $S_{12}$, $S_{21}$ being interrupted, however. Both between the connecting point of the diodes $D_{12}$, $D_{21}$ and the connecting point of the capacitors $C_{11}$, $C_{12}$ as well as between the connecting point of the capacitors $C_{21}$, $C_{22}$ there is connected, a diode $D_9$ and $D'_9$ respectively in a reverse direction relative to the terminal for direct voltage. The output of the circuit is formed by the connecting point C of the switch members $S_{12}$ and $S_{21}$. The output becomes positive when $S_{11}$ and $S_{12}$ are switched on, the output becomes zero when $S_{12}$ and $S_{21}$ are switched on, $S_{11}$ and $S_{22}$ being switched off, and the output becomes negative when $S_{21}$ and $S_{22}$ are switched on.

The switch snubber for $S_{11}$ is formed by $D_{11}$, $C_{11}$, the switch snubber for $S_{12}$ is formed by $D_{21}$, $C_{21}$, the switch snubber for $S_{21}$ is formed by $D_{12}$, $C_{12}$ and the switch snubber for $S_{22}$ is formed by $D_{22}$, $C_{22}$. The circuit operates as follows.

Assume that the switch members $S_{11}$ and $S_{12}$ are switched on so that the output C carried a positive potential. The capacitors $C_{11}$ and $C_{21}$ are then discharged and the capacitors $C_{12}$ and $C_{22}$ are charged up to $U_c$. During switching over the output C from a positive potential to a zero potential, $S_{11}$ is switched off and $S_{12}$ remains switched on. The current flowing through $S_{11}$ is taken over by its snubber circuit $D_1$, $C_{11}$ with parallel-connected circuits formed by $C_{14}$-$D_{14}$-$C_{12}$. As explained above, the capacitor $C_{11}$ is charged up to $U_c$ and the capacitor $C_{12}$ is discharged to zero volt. The voltage over $S_{11}$ is limited by its clipping circuit consisting of $C_{14}$-$D_{14}$-$D_{12}$ parallel with the clipping circuit $D_{11}$-$D_{13}$-$C_{13}$ to the voltage $U_c$. The current through the load then flows from the zero terminal via the diode $D_9$ and $S_{12}$. $S_{21}$ is subsequently switched on, so that the current can flow from and to the 0-terminal.

During switching over of the output C from zero potential to a starting level with a negative potential, $S_{12}$ is switched off. If there is still current flowing through $S_{12}$ this current may flow further via the circuit formed by $D_{21}$-$C_{21}$-$D_{25}$ with the circuit, connected in parallel there to, formed by $C_{24}$-$D_{24}$-$C_{22}$-$D_{25}$. During this process the capacitor $C_{21}$ is charged up to a voltage $U_c$ and the capacitor $C_{22}$ is discharged to 0 volt. On attainment of this situation the parallel clipping circuit $C_{24}$-$D_{24}$-$D_{22}$-$D_{26}$-$D_{25}$ and $D_{21}$-$D_{23}$-$C_{23}$-$D_{26}$-$D_{25}$ respectively become operative so that the voltage over the switched-off switch member $S_{12}$ is limited to the

voltage $U_c$. $S_{22}$ can then be switched on.

If, during switching off of $S_{12}$ no current were to flow therethrough, the above described process in relation to opening of $S_{12}$ will not take place. During switching on of $S_{22}$ a resonant current will then be produced via the circuit formed by $(D_{21}$-$C_{21}$-$S_{22}$-$L_2)//(C_{24}$-$D_{24}$-$C_{22}$-$S_{22}$-$L_2)$. As a result the capacitor $C_{21}$ will be charged up to a voltage $U_c$ and the capacitor $C_{22}$ will be discharged to 0 volt.

The operation of the circuit during switching off of the other switch members takes place in a similar manner and can easily be deduced from the above. The above description shows that the snubber circuit for providing an output voltage at three levels essentially operates in the same way as in the circuit shown in Figure 6 in which the output can assume only two voltage levels. In this circuit a primary and a secondary snubber circuit may also always be allotted and two circuits always work in parallel during the protection of the switch members. As shown in figure 12 by dotted lines, a current increase-limiting coil $L_4$ can of course also be incorporated in the neutral line. It is furthermore possible to design the circuit shown in figure 12 to be multi-phase, such as the three-phase circuit shown, for example in figure 11. The means for discharging the energy may be connected, in a similar manner as shown, for example, in Figure 7, to the respective further capacitors $C_{14}$, $C_{13}$; $C_{24}$,$C_{23}$. In the said three-phase embodiment these further capacitors can be designed jointly for all phases.

## Claims

1. Symmetrical electrical snubber circuit for protecting at least two series-connected switch members ($S_1$; $S_2$) of which the ends which are not connected to each other form a positive (A) and a negative (B) terminal, respectively, for connecting, via at least one coil ($L_1$; $L_2$), a direct voltage ($U_{DC}$), at least one first element ($D_5$; $D_6$) having diode action connected in the reverse direction and a series circuit of at least one capacitor ($C_1$; $C_2$) and at least one second element ($D_1$; $D_2$) having diode action connected in the forward direction relative to the terminals (A; B) for direct voltage being connected in parallel to each of the switch members ($S_1$; $S_2$) respectively, said at least one capacitor ($C_1$; $C_2$) of each series circuit being connected to the mutual connection point (C) of the switch members ($S_1$; $S_2$), and means (ET) for discharging the energy stored in the capacitors ($C_1$; $C_2$) being provided, characterized by being provided for each switch member ($S_1$; $S_2$) a further series circuit of at least one further capacitor ($C_3$; $C_4$) and at least one third ele-

ment ($D_3$; $D_4$) having diode action connected in the forward direction relative to the terminals (A; B) for direct voltage, and being connected, respectively, between the connecting point of said at least one capacitor ($C_1$; $C_2$) and said at least one second element ($D_1$; $D_2$) having diode action of the series circuit associated with the one switch member ($S_1$; $S_2$) and the terminal (B; A) for direct voltage associated with the other switch member ($S_2$; $S_1$), all this in a manner such that a snubber circuit which is as low in stray inductance as possible is obtained, and wherein the means (ET) for discharging the stored energy being connected to the respective further capacitors ($C_3$; $C_4$).

2. Symmetrical electrical snubber circuit comprising a first and second series-connected symmetrical snubber circuit according to claim 1, each having at least two series-connected switch members ($S_{11}$, $S_{12}$; $S_{21}$, $S_{22}$), wherein the negative terminal (B,) for direct voltage of the first symmetrical snubber circuit and the positive terminal ($A_2$) for direct voltage of the second symmetrical snubber circuit being connected to each other and forming a zero potential terminal (O) for the direct voltage ($\frac{1}{2}U_{DC}$; $\frac{1}{2}U_{DC}$) to be applied, the direct connection between this zero potential terminal (O) and the mutually connected ends (C) of the switch members ($S_{12}$; $S_{21}$) of said first and second symmetrical snubber circuit being interrupted and the respective first elements ($D_{15}$, $D_{16}$; $D_{25}$, $D_{26}$) having diode action being connected parallel to the switch members ($S_{11}$, $S_{12}$; $S_{21,}$, $S_{22}$) respectively, and wherein at least one element ($D_9$; $D'_9$) having diode action in the reverse direction relative to the terminals ($A_1$, $B_1$; $A_2$, $B_2$) for direct voltage being connected between the said zero potential terminal (O) and the mutual connecting points of the at least two series-connected switch members ($S_{11}$, $S_{12}$, $S_{21}$, $S_{22}$) of said first and second symmetrical snubber circuit.

3. Symmetrical electrical snubber circuit according to claim 1 or 2, comprising several parallel circuits of at least two series-connected switch members ($S_{11}$, $S_{12}$; $S_{21}$, $S_{22}$, $S_{31}$, $S_{32}$), wherein the further capacitors ($C_3$, $C_4$; $C_{13}$, $C_{14}$; $C_{23}$, $C_{24}$) are designed for all the circuits jointly and are connected at one end to a terminal ($A_1$, $A_2$, $A_3$; $B_1$, $B_2$, $B_3$) for direct voltage and at the other end to the associated corresponding third elements ($D_{13}$, $D_{23}$, $D_{33}$; $D_{14}$, $D_{24}$, $D_{34}$) having diode action.

4. Symmetrical electrical snubber circuit according to claim 1, 2 or 3, wherein the respective switch members ($S_1$, $S_2$; $S_{11}$-$S_{22}$; $S_{11}$-$S_{32}$) consist of a group of several parallel switch members.

5. Symmetrical electrical snubber circuit according to claim 1, 2, 3 or 4, wherein the switch members ($S_1$, $S_2$; $S_{11}$, $S_{12}$, $S_{21}$; $S_{22}$, $S_{31}$, $S_{32}$) of a circuit are designed as two-way switches.

6. Symmetrical electrical snubber circuit according to claim 1, 2, 3, 4 or 5, wherein the switch members ($S_1$, $S_2$; $S_{11}$-$S_{22}$; $S_{11}$-$S_{32}$) are controlled semiconductor elements.

7. Symmetrical electrical snubber circuit according to claim 6, wherein the semiconductor elements are GTO thyristors.

**Revendications**

1. Circuit électrique symétrique de suppression de surtension pour la protection d'au moins deux éléments interrupteurs ($S_1$; $S_2$) connectés en série et dont les extrémités qui ne sont pas reliées entre elles constituent une borne respectivement positive (A) et négative (B) pour le raccordement d'une tension continue ($U_{DC}$) par l'intermédiaire d'au moins un bobinage (L1; L2), au moins un premier élément agissant comme diode ($D_5$; $D_6$) et branché dans le sens inverse ainsi qu'un circuit série constitué d'au moins un condensateur ($C_1$; $C_2$) et d'au moins un deuxième élément agissant comme diode ($D_1$; $D_2$) et branché dans le sens direct relativement aux bornes de tension continue (A; B) étant branchés en parallèle sur chacun des éléments interrupteurs ($S_1$; $S_2$) respectifs, ledit au moins un condensateur ($C_1$; $C_2$) de chaque circuit série étant relié au point de connexion commun (C) des éléments interrupteurs ($S_1$; $S_2$), et des moyens (ET) étant prévus pour décharger l'énergie stockée dans les condensateurs ($C_1$; $C_2$), caractérisé en ce qu'il est prévu pour chaque élément interrupteur ($S_1$; $S_2$) un circuit série additionnel constitué d'au moins un condensateur additionnel ($C_3$; $C_4$) et d'au moins un troisième élément agissant comme diode ($D_3$; $D_4$) et branché dans le sens direct relativement aux bornes de tension continue (A; B), et qui est branché respectivement entre le point de connexion dudit au moins un condensateur ($C_1$; $C_2$) et dudit au moins un deuxième élément agissant comme diode ($D_1$; $D_2$) du circuit série associé audit élément interrupteur ($S_1$; $S_2$) et la borne de tension continue (B; A) associée à l'autre élément interrupteur ($S_2$; $S_1$), le tout de telle manière que l'on obtienne un circuit électrique de suppression de surtension dont les inductances parasites soient aussi faibles que possible, et dans lequel les moyens (ET) prévus pour décharger l'énergie stockée sont reliés aux condensateurs additionnels respectifs ($C_3$; $C_4$).

2. Circuit électrique symétrique de suppression de surtension comportant un premier et un deuxième circuit électrique symétrique de suppression de surtension selon la revendication 1 connectés en série, comportant chacun au moins deux éléments interrupteurs ($S_{11}$, $S_{12}$; $S_{21}$, $S_{22}$) connectés en série, dans lequel la borne négative de tension continue ($B_1$) du premier circuit électrique symétrique de suppression de surtension et la borne positive de tension continue ($A_2$) du deuxième circuit électrique symétrique de suppression de surtension sont connectées entre elles et forment une borne de potentiel zéro (O) pour la tension continue à appliquer ($\frac{1}{2}U_{DC}$; $\frac{1}{2}U_{DC}$), la connexion directe entre cette borne de potentiel zéro (O) et les extrémités reliées entre elles (C) des éléments interrupteurs ($S_{12}$; $S_{21}$) desdits premier et deuxième circuits électriques symétriques de suppression de surtension étant interrompue et les premiers éléments respectifs agissant comme diode ($D_{15}$, $D_{16}$; $D_{25}$, $D_{26}$) étant respectivement branchés en parallèle sur les éléments interrupteurs ($S_{11}$, $S_{12}$; $S_{21}$, $S_{22}$), et dans lequel au moins un élément agissant comme diode ($D_9$, $D'_9$) et branché dans le sens inverse relativement aux bornes de tension continue ($A_1$, $B_1$; $A_2$, $B_2$) est connecté entre ladite borne de potentiel zéro (O) et les points de connexion communs desdits au moins deux éléments interrupteurs ($S_{11}$, $S_{12}$; $S_{21}$, $S_{22}$) branchés en série desdits premier et un deuxième circuits électriques symétriques de suppression de surtension.

3. Circuit électrique symétrique de suppression de surtension selon la revendication 1 ou 2, comportant plusieurs circuits parallèles constitués d'au moins deux éléments interrupteurs ($S_{11}$, $S_{12}$; $S_{21}$, $S_{22}$; $S_{31}$, $S_{32}$) branchés en série, dans lequel les condensateurs additionnels ($C_3$, $C_4$; $C_{13}$, $C_{14}$; $C_{23}$, $C_{24}$) sont conçus pour l'ensemble de tous les circuits et reliés en une extrémité à une borne de tension continue ($A_1$, $A_2$, $A_3$; $B_1$, $B_2$, $B_3$) et en leur autre extrémité au troisième élément agissant comme diode correspondant et associé ($D_{13}$, $D_{23}$, $D_{33}$; $D_{14}$, $D_{24}$, $D_{34}$).

4. Circuit électrique symétrique de suppression de surtension selon la revendication 1, 2 ou 3, dans lequel les éléments interrupteurs respectifs ($S_1$, $S_2$; $S_{11}$-$S_{22}$; $S_{11}$-$S_{32}$) sont constitués d'un groupe de plusieurs éléments interrupteurs en parallèle.

5. Circuit électrique symétrique de suppression de surtension selon la revendication 1, 2, 3 ou 4, dans lequel les éléments interrupteurs ($S_1$, $S_2$; $S_{11}$, $S_{12}$; $S_{21}$, $S_{22}$; $S_{31}$, $S_{32}$) d'un circuit sont conçus comme interrupteurs à deux directions.

6. Circuit électrique symétrique de suppression de surtension selon la revendication 1, 2, 3, 4 ou 5, dans lequel les éléments interrupteurs respectifs ($S_1$, $S_2$; $S_{11}$-$S_{22}$; $S_{11}$-$S_{32}$) sont des éléments semi-conducteurs commandés.

7. Circuit électrique symétrique de suppression de surtension selon la revendication 6, dans lequel les éléments semiconducteurs commandés sont des thyristors GTO.

**Patentansprüche**

1. Symmetrische elektrische Schaltung zur Unterdrückung von Überspannungen zum Schutz von mindestens zwei in Reihe geschalteten Schaltelementen ($S_1$; $S_2$), deren nicht miteinander verbundenen Enden eine positive (A) bzw. negative (B) Klemme zum Anschluss einer Gleichspannung ($U_{DC}$) über mindestens eine Spule (L1; L2) bilden, wobei mindestens ein erstes, als Diode wirkendes, in Sperrrichtung geschaltetes Element ($D_5$; $D_6$) sowie eine Reihenschaltung aus mindestens einem Kondensator ($C_1$; $C_2$) und mindestens einem zweiten, als Diode wirkenden, in Durchlassrichtung in bezug auf die Gleichspannungsklemmen (A; B) geschalteten Element ($D_1$; $D_2$) in Parallelschaltung zu jedem der jeweiligen Schaltelemente ($S_1$; $S_2$) geschaltet sind, der mindestens eine Kondensator ($C_1$; $C_2$) jeder Reihenschaltung mit dem gemeinsamen Verbindungspunkt (C) der Schaltelemente ($S_1$; $S_2$) verbunden ist, und Mittel (ET) zum Entladen der in den Kondensatoren ($C_1$; $C_2$) gespeicherten Energie vorgesehen sind, dadurch gekennzeichnet, dass für jedes Schaltelement ($S_1$; $S_2$) eine zusätzliche Reihenschaltung aus mindestens einem zusätzlichen Kondensator ($C_3$; $C_4$) und mindestens einem dritten, als Diode wirkenden, in Durchlassrichtung in bezug auf die Gleichspannungsklemmen (A; B) geschalteten Element ($D_3$; $D_4$) vorgesehen und jeweils zwischen dem Verbindungspunkt des genannten mindestens einen Kondensators ($C_1$; $C_2$) und

des genannten zweiten, als Diode wirkenden Elements ($D_1$; $D_2$) der dem genannten einen Schaltelement ($S_1$; $S_2$) zugeordneten Reihenschaltung und der dem genannten anderen Schaltelement ($S_2$; $S_1$) zugeordneten Gleichspannungsklemme (B; A) geschaltet ist, das Ganze derart, dass sich eine elektrische Schaltung zur Unterdrückung von Überspannungen mit möglichst kleiner Streuinduktivität ergibt, und bei welcher die Mittel (ET) zum Entladen der gespeicherten Energie mit den jeweiligen zusätzlichen Kondensatoren ($C_3$; $C_4$) verbunden sind.

2. Symmetrische elektrische Schaltung zur Unterdrückung von Überspannungen, umfassend eine erste und eine zweite symmetrische elektrische Schaltung zur Unterdrückung von Überspannungen nach Anspruch 1, die in Reihe geschaltet sind, wobei jede davon mindestens zwei in Reihe geschaltete Schaltelemente ($S_{11}$, $S_{12}$; $S_{21}$, $S_{22}$) aufweist, die negative Gleichspannungsklemme ($B_1$) der ersten symmetrischen elektrischen Schaltung zur Unterdrückung von Überspannungen und die positive Gleichspannungsklemme ($A_2$) der zweiten symmetrischen elektrischen Schaltung zur Unterdrückung von Überspannungen miteinander verbunden sind und eine Nullpotentialklemme (O) für die anzulegende Gleichspannung ($\frac{1}{2}U_{DC}$; $\frac{1}{2}U_{DC}$) bilden, die direkte Verbindung zwischen dieser Nullpotentialklemme (O) und den miteinander verbundenen Enden (C) der Schaltelemente ($S_{12}$; $S_{21}$) der genannten ersten und zweiten symmetrischen elektrischen Schaltungen zur Unterdrückung von Überspannungen unterbrochen ist, und die jeweiligen ersten, als Diode wirkenden Elemente ($D_{15}$, $D_{16}$; $D_{25}$, $D_{26}$) den Schaltelementen ($S_{11}$, $S_{12}$; $S_{21}$, $S_{22}$) jeweils parallelgeschaltet sind, und bei welcher mindestens ein als Diode wirkendes, in Sperrichtung in bezug auf die Gleichspannungsklemmen ($A_1$, $B_1$; $A_2$, $B_2$) geschaltetes Element ($D_9$, $D'_9$) zwischen der genannten Nullpotentialklemme (O) und den gemeinsamen Verbindungspunkten der genannten mindestens zwei in Reihe geschalteten Schaltelemente ($S_{11}$, $S_{12}$; $S_{21}$, $S_{22}$) der genannten ersten und zweiten symmetrischen elektrischen Schaltungen zur Unterdrückung von Überspannungen geschaltet ist.

3. Symmetrische elektrische Schaltung zur Unterdrückung von Überspannungen nach Anspruch 1 oder 2, umfassend mehrere parallele Schaltungen aus mindestens zwei in Reihe geschalteten Schaltelementen ($S_{11}$, $S_{12}$; $S_{21}$, $S_{22}$; $S_{31}$, $S_{32}$), bei welcher die zusätzlichen Kondensatoren ($C_3$, $C_4$; $C_{13}$, $C_{14}$; $c_{23}$, $c_{24}$) für die Gesamtheit aller Schaltungen ausgebildet und am einen Ende mit einer Gleichspannungsklemme ($A_1$, $A_2$, $A_3$; $B_1$, $B_2$, $B_3$) und am anderen Ende mit dem entsprechenden und zugeordneten dritten, als Diode wirkenden Element ($D_{13}$, $D_{23}$, $D_{33}$; $D_{14}$, $D_{24}$, $D_{34}$) verbunden sind.

4. Symmetrische elektrische Schaltung zur Unterdrückung von Überspannungen nach Anspruch 1, 2 oder 3, bei welcher die jeweiligen Schaltelemente ($S_1$, $S_2$; $S_{11}$-$S_{22}$; $S_{11}$-$S_{32}$) aus einer Gruppe von mehreren parallelgeschalteten Schaltelementen bestehen.

5. Symmetrische elektrische Schaltung zur Unterdrückung von Überspannungen nach Anspruch 1, 2, 3 oder 4, bei welcher die Schaltelemente ($S_1$, $S_2$; $S_{11}$, $S_{12}$; $S_{21}$, $S_{22}$; $S_{31}$, $S_{32}$) einer Schaltung als wechsel schalter ausgebildet sind.

6. Symmetrische elektrische Schaltung zur Unterdrückung von Überspannungen nach Anspruch 1, 2, 3, 4 oder 5, bei welcher die jeweiligen Schaltelemente ($S_1$ $S_2$; $S_{11}$-$S_{22}$; $S_{11}$;-$S_{32}$) gesteuerte Halbleiterelemente sind.

7. Symmetrische elektrische Schaltung zur Unterdrückung von Überspannungen nach Anspruch 6, bei welcher die gesteuerten Halbleiterelemente GTO-Thyristoren sind.

Fig-1

Fig-2

## fig-3

## fig-4

## fig-5

## fig-6

15

fig-7

fig-8

fig - 9

fig - 10

fig-11

EP 0 288 111 B1

fig-12